# EUROPEAN PATENT SPECIFICATION

(11) **EP 0 739 322 B1**
(45) Date of publication and mention of the grant of the patent: **17.06.1998**
(21) Application number: 95905191.3
(22) Date of filing: 11.01.1995
(51) Int. Cl.: C04B 33/08, C04B 35/636

(54) **USE OF AN ADDITIVE IN THE PRODUCTION OF BRICKS**
VERWENDUNG EINES ZUSATZSTOFFS BEI DER STEINERZEUGUNG
UTILISATION D'UN ADDITIF DESTINE A LA FABRICATION DE BRIQUES

(30) Priority: 11.01.1994 GB 9400359
(43) Date of publication of application: 30.10.1996
(73) Proprietor: ABR FOODS LIMITED, Northants NN17 5JX (GB)
(72) Inventor: ROBINS, Christopher, Arthur, Oundle Peterborough PE8 4DG (GB); BRIDGE, Thomas, Stuart, Congleton CW12 3RH (GB)
(74) Representative: Wain, Christopher Paul
(86) International application number: GB9500044
(87) International publication number: WO9518776

(56) References cited:
- EP-A- 0 433 886
- US-A- 4 226 635
- US-A- 4 432 801
- CERAMIC ABSTRACTS, vol.57, no.7, July 1978 page 162 N.B.SINGH 'EFFECT OF GLUCOSE ON THE CONSUMPTION OF GYPSUM DURING HYDRATION OF PORTLAND CEMENT'

## Description

This invention relates to the use of a starch-derived additive in making bricks and the like.

In the manufacture of bricks, roof tiles, floor tiles, etc., generally known as heavy clay industry products, the principal raw materials are shales, marls and fireclays. These are generally supplied "as dug" and can contain varying amounts of moisture. Depending on the product and the plant available, the raw material may be crushed before entering a grinding/mixing system where it is mixed with water. The soft mud-like product is then extruded or otherwise shaped, dried and then fired to produce the finished article. In the firing step, the initial effect of heating is to drive off moisture but from about 750°C up to about 1100°C, irreversible chemical reactions occur which create the unitary product.

It is a known problem in the industry that, during the water removal stage of firing, surface scumming can occur due to the presence of naturally occurring salts in the raw materials. The main cause of scumming is thought to be the presence of water-soluble sulphates, although other water-soluble salts such as chlorides and nitrates may also play a part. The problem can be reduced or even largely avoided by using raw materials which contain very low quantities of the offending salts, but such materials are becoming less and less available and it is nowadays often necessary to use raw materials which do contain significant quantities of water-soluble sulphates.

Since scumming is a highly undesirable feature, affecting the surface appearance of the finished product, the industry has sought ways of dealing with the problem. According to one approach, naturally occurring organic materials have been included in the brick-making mix, such as lignosulphonates and tannates, but these were not satisfactory.

The most effective answer (although it is not always satisfactory) has been found to be to include in the brick-making mix a water-soluble barium salt. The use of barium carbonate, for example, to prevent efflorescence and scumming of bricks during their manufacture is disclosed in US-A-4,226,635. The barium is believed to render the sulphate ions insoluble and thus reduce or prevent their migration to the surface during firing. Whilst the use of barium is effective in reducing summing, it has the serious disadvantage of being hazardous to health. To try to reduce the problem, use has been made of solutions or slurries of barium compounds instead of powders, but this is troublesome in practice and it does not overcome the environmental and personnel hazards involved in handling and using these materials.

Various unwanted by-products from the starch and sugar industries have been used or suggested for use as additives in the heavy clay industry, for example to improve green strength. These by-products are, for example, dextrins, glucose or molasses, and their extract nature has varied widely. Some reduction in scumming has on occasions been achieved using these by-products, with or without barium salts, but no consistently satisfactory results have been achieved. Furthermore, some are water-insoluble and have been used in powder form which is itself unsatisfactory.

We have now investigated the use of starch hydrolysis products as additives to reduce or prevent scumming in heavy clay products. We have found that it is possible reliably and consistently to avoid scumming without the use of barium salts, even in clays of relatively high salt content.

According to one aspect of the present invention there is provided an additive for use in reducing scumming in the manufacture of fired heavy clay articles, which comprises a liquid syrup carbohydrate derived from the partial hydrolysis of starch, having a DE value of less than about 50, and preferably less than 40, and most preferably less than 30.

The additive includes the dry powder of such a syrup, which powder can be reconstituted with water to make the syrup.

The additive for use in the present invention is derived from starch. The source of the starch is not critical, but we prefer to use wheat starch. However, starches from other sources such as maize, potato, tapioca, nce, sorghum can be used.

As is well known, starch is obtained from wheat by milling to release the flour and then separating the starch from the protein in a wet process. The starch is usually obtained as two different types, that is an A-starch which is of larger particle size and relatively pure, and a B-starch which is of smaller particle size and includes impurities such as fats and gums. The additive for use in the present invention can be made from either type of starch or, indeed, from a mixture of the two. A general discussion on the properties of Glucose and Fructose containing sweeteners from starch is found in Whistler et al., Starch: Chemistry and Technology, Academic Press, Inc., second edition, USA, (1984), pp 611 to 639.

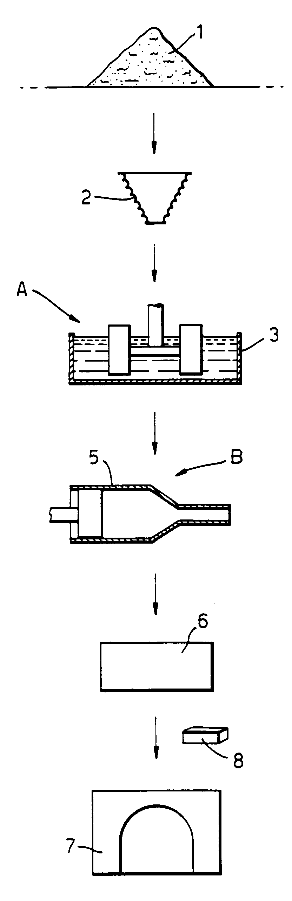

In order to make the additive, the starch is partially hydrolysed. As will be understood in the art, the hydrolysis of starch is a multistep process which results ultimately in the production of glucose. A measure of the degree of hydrolysis is given by the so-called dextrose equivalent (DE) value, which is conventionally zero for starch itself and 100 for glucose. Intermediate values give an indication of the extent to which the starch has been hydrolysed towards the ultimate complete conversion to glucose. [DE values in the present specification are those measured by the Lane and Eynon, (see Lane J.H.: Eynon, L.: Determination of reducing sugars by Fehlings solution with methylene blue indicator, J. Chem. Soc., 50, 85 (1931).] In the present invention, the extent of hydrolysis is important. Broadly speaking, the starch should only be hydrolysed enough to make it water-soluble although some further limited hydrolysis can be tolerated but is not preferred. Generally, to achieve water solubility, a DE of about 20 to 25 will usually be required (the figure varies depending on the starch and the hydrolysis conditions), and preferably no further hydrolysis will occur since in general this makes the additive less effective. For most purposes, the DE should be kept below 40 and, most preferably, at or below about 30 especially when high concentrations of salts are present in the clay. At lower concentrations (e.g. 0.06% dry weight), a higher DE (e.g. 45 or 50) can be satisfactory. Various liquid carbohydrate syrups having DE values of less than 50 are disclosed in US-A-4,432,801. Chromotographic analysis of the hydrolysed starch used in the invention will normally reveal a DP 4+ value of at least about 65%, and preferably more than 70%.

In order to make an additive for use in the invention, starch is partially hydrolysed. The hydrolysis can be effected chemically or enzymatically. We prefer to use enzymic hydrolysis since we have found that dextrinisation can be closely controlled in this way. During the process, as will be known to those skilled in the art, a viscosity modifying enzyme can be used in order to achieve the desired viscosity in the final syrup product. For use as an additive in the heavy clay industry, the viscosity of the syrup under conditions of use must be such that it can be homogeneously distributed throughout the mix. We have found that, in general, the viscosity should be no more than about 1000 cps at 50°C, and is more preferably from 300 to 600 cps at 50°C.

The additives for use in the invention are very effective in dealing with the problem of scum formation in fired heavy clay articles, especially in those made from materials containing relatively high levels (e.g. about 0.1% or more dry weight sulphates) of water-soluble salts. Whilst we do not know exactly how the additive of the invention functions, we believe that it prevents migration of sulphate ions by a sieving effect. The length of the carbon backbone chain, and hence the degree of hydrolysis, is an important factor.

As will be appreciated, the additives for use in the invention are not toxic (or need not contain any toxic materials) and hence the toxicity problems attaching to the use of barium salts can be completely avoided. Furthermore, since the additives are liquid (and do not need to contain any insolubles), dosage is easy and can be accurately effected, and thorough blending into the brick making mix is easily achieved. The use of the described additives also improves the strength of the fired articles.

A method of making liquid syrup for use in making fired heavy clay articles, is described which comprises subjecting starch to partial hydrolysis to form a water-soluble syrup, preferably of DE less than 40.

The invention further includes a method of making fired heavy clay articles, such as bricks and tiles, using an additive hereindescribed, preferably in place of any barium additive.

In order that the invention may be more fully understood, reference is made to the accompanying drawing which is a very schematic simplified representation of one embodiment of a heavy clay article production process, to illustrate the use of the additives of the invention.

Referring to the drawing, clay (or other) stock 1 (normally nowadays containing water-soluble salts) is passed to a primary crusher 2 and then to a pan grinder 3 where the raw clay is mixed with water. The amount of water added is minimal. The mixture is then passed to the mixing chamber of an extruder 5 to shape the mixture (alternatively, of course, shaping can be effected in another way). The shaped "green" article 8 is then passed to a drier 6, and finally fired in a kiln 7.

The additive for use in the invention is conveniently supplied at one (or both) of two stages in the process. Thus, it may be provided to the pan grinder, as indicated by arrow A, suitably in the water supply, so that it is intimately mixed with the clay at that stage.
Alternatively, it can be supplied just upstream of the extruder, as indicated by arrow B, again in the water supply if desired, so that it becomes mixed with the clay in the extruder mixing chamber.

Typical addition rates vary depending on the raw material used and the level of soluble salts. We prefer to use from 0.1 - 0.5% (dry weight basis) of additive, based on the weight of clay, and more preferably 0.15 to 0.3% for extruded clay. For shales and marls, we prefer to use 0.25% - 0.5%, and for soft mud 0.75% to 1.5%. Routine trials may be needed in any particular case to establish the optimum dosage of additive. One suitable test experiment is to use 1 kg of dry ground clay (<3mm) (or other material) and 275 ml water, with various quantities of additive premixed in the water. The clay and water are mixed to the plastic consistency required to make a briquette, and at this stage extra water can be added to achieve the necessary plasticity. The clay mix is then hand wedged to remove as much air as possible prior to throwing into a wooden mould to shape the briquette. The briquette is air dried prior to being placed into a drier at 40°C overnight. The drier temperature is then raised to 110°C at which time the briquette is removed from the mould and left in the drier for a further 6 hours. The dried briquettes are then fired in kilns using firing schedules suitable to the materials under test.

It will be appreciated that the additives for use in the invention can be made with various specific quantities and solids contents. We prefer generally that the additive have a solids content of 60 to 70% by weight and a specific gravity of around 1.36 although these figures are not critical. The amount of additive to be used in brick making is usually about 0.2% of the clay on a dry solids basis, but routine trial and experiment may be needed to determine the optimum amount in any particular case.

The following Example, given by way of illustration only, describes an additive for use in the invention and its production.

### Example 1

Filtered B-starch from wheat is pH adjusted with caustic to 6.5-6.9 and alpha-amylase is added. The B-starch is then heated to 95°C using a hydro-heater (jet-cooker) and pumped into two holding tanks (coagulation tanks) giving a residence time of five hours. The high temperature causes the starch granules to swell and rupture which allows the alpha-amylase enzyme to cleave the starch into smaller chain lengths. The high temperature also causes soluble protein to coagulate which allows it to be separated later in the process. The DE of the product is around 20-25% and is governed by the enzyme used and the reaction conditions.

After coagulation, the pH is adjusted to pH 4.0, with acid, and the temperature reduced to 60°C. A further enzyme cocktail (consisting mainly of cellulase and pentasonases) is added and the B-liquor is pumped into holding tanks which allow the enzymes to reduce the viscosity of the liquor. Approximately 17 hours' holding time is required. The B-liquor is next pumped to stacked disk separators, which remove protein and other insoluble material. The clarified B-liquor is then evaporated by a two stage evaporation process to around 62% solids content.

The resulting carbohydrate syrup was used in a brick making process as described, and no scumming occurred. Comparative tests without using the additive resulted in bricks with severe scumming.

Typically, an additive of the invention made by enzymic hydrolysis of wheat B-starch would have the following characteristics:
Solids 58-62%
Dextrose equivalent 22-26
HPLC (DSB)%
   DP1 4-6
   DP2 10-15
   DP3 8-12
   DP4+ 67-78
pH (10%) 4-5
viscosity <1000 cps (50°C)

### Appearance - brown, wholly soluble syrup, non-toxic.

Additives of the invention may, of course, contain other substances if desired. For example, a preservative can be included, eg. a biocide, in a suitable amount, eg. from 0.05 to 0.8% by weight of the additive.

### Example 2

10kg of dry clay was mixed with 1900g water to form a stiff crumbly paste. An addition of 0.25% (dry weight basis) of carbohydrate syrup was included in the mixture as described below. The material was fed to the mixing chamber of a Rawdon laboratory extruder and the extrudate (crosssectional area 1" x 1.5") was cut to six inch lengths to form briquettes. The briquettes were placed on a pallet for air drying and then placed in a drier at 40°C overnight. The drier temperature was then raised to 110°C for a further 6 hours. The resulting briquettes were then examined for scumming and the results are shown in Table 1 below. Briquettes produced by the same method but omitting the carbohydrate syrup additive of the invention, had significant surface scumming.

The nature and amount of the carbohydrate syrup were varied from batch to batch. In the case of wheatderived syrups, products from B-fractions and from A-fractions were tested, having DE values of 25,45,65 and 95. The amounts used were from 0.1 to 0.5% by weight of the clay. The results showed that low DE values were best for reducing scumming and that amounts in the range 0.1 to 0.5% were generally satisfactory depending on the raw material being calculated.

Syrups and powdered products (solubilised before use) with DE values of 6,12,15 and 18 were also tested, at the same dosage rates as above, the products being derived from wheat, maize, potato and tapioca starches. The results were excellent and those for the powders are shown in Table 2 below. The amount of scumming was nil.

**Table 1**

| CARBOHYDRATE SYRUP | | | |
|---|---|---|---|
| SYRUP | | | BRIQUETTE |
| STARCH SOURCE | DE VALUE | AMOUNT ADDED | SCUMMING |
| WHEAT B | 25 | 0.5 | None |
| WHEAT B | 45 | 0.5 | Slight |
| WHEAT B | 65 | 0.5 | Significant |
| WHEAT A | 30 | 0.5 | None |
| WHEAT A | 65 | 0.5 | Significant |
| WHEAT A | 95 | 0.5 | Yes |
| MIXED A & B | 25 | 0.5 | None |
| MIXED A & B | 65 | 0.5 | Significant |
| MAIZE | 42 | 0.5 | Slight |
| POTATO | 42 | 0.5 | Slight |
| TAPIOCA | 42 | 0.5 | Slight |

**Table 2**

| CARBOHYDRATE POWDER | | | BRIQUETTE |
|---|---|---|---|
| STARCH SOURCE | DE VALUE | *CONCENTRATION OF ADDITIVE | SCUMMING |
| POTATO | 6 | 0.5 | Nil |
| MAIZE | 12 | 0.5 | Nil |
| MAIZE | 15 | 0.5 | Nil |
| WHEAT | 18 | 0.5 | Nil |
| TAPIOCA | 18 | 0.5 | Nil |

The powders were thoroughly solubilized with water such that the resultant solution produced contained 60% concentration of carbohydrate solids. Concentration of additive expressed as weight of additive as percent of Clay weight.

### Example 3

The procedure of Example 2 was repeated using shale and marl. In both cases, the results were essentially the same as in Example 2. Once again, levels of 0.25 to 0.5%. of the carbohydrate syrups were required to give the desired removal of scum.

### Example 4

1kg of dried soft mud was mixed with water to a mud-like consistency. The same syrups were tested as in Example 2, but greater amounts were used (from 1 to 2% by weight of the clay). The material was then hand thrown into a "Frogged Mould" to form a brick shape. The soft brick was then released from the mould on to a pallet and then dried and fired as in Example 2.

Bricks were also made by the same method but without using any carbohydrate syrup. These bricks showed surface scumming whereas the bricks made using the various carbohydrate syrups in accordance with the invention did not. Similar results were obtained when the bricks were dried in a brickwork production drier using a current schedule of 48 hours up to a temperature of 100°C, after which the bricks were fired as described previously.

The above Examples describe the production of briquettes. We have also made other heavy clay industry products such as roof and floor tiles and have included the additive used in accordance with the invention. The results are the same as described above, namely in the conditions of use of the invention the scumming is eliminated or very significantly reduced.

Experiments were also effected to make briquettes etc. including a biocide in the mix. The results were essentially as described above.

## Claims

1. The use of an additive for reducing scumming in the manufacture of fired heavy clay articles, the additive being a water-soluble liquid syrup carbohydrate derived from the partial hydrolysis of starch to a DE value of less than 50.

2. The use according to claim 1, wherein the DE value is less than 40.

3. The use according to claim 1 or 2, wherein the syrup has been formed by reconstituting a dry starch partial hydrolysate powder with water.

4. The use according to claim 1,2 or 3, wherein the starch is wheat, maize, potato, tapioca, rice or sorghum starch.

5. The use according to any preceding claim, wherein the said carbohydrate is wholly or mainly the B-fraction of starch.

6. The use according to any preceding claim, wherein from 0.1 to 0.5% (dry weight basis) of additive is used, based on the weight of clay, in the manufacture of a fired heavy clay article.

7. The use according to any preceding claim, wherein the additive also contains a preservative.

8. A process for making a fired heavy clay article which comprises mixing the clay with water, shaping the mix and firing, characterised by including in the mix a water-soluble liquid syrup carbohydrate derived from the partial hydrolysis of starch to a DE value of less than 50.

## Patentansprüche

1. Die Verwendung eines Additivs zum Reduzieren der Abschäumung bei der Herstellung von hartgebrannten Tonwaren, wobei das Additiv aus einem aus der teilweisen Aufschließung von Stärke mit einem DE-Wert von unter 50 abgeleiteten wasserlöslichen Kohlenhydratsirup besteht.

2. Die Verwendung nach Anspruch 1, wobei der DE-Wert unter 40 liegt.

3. Die Verwendung nach Anspruch 1 oder 2, bei der das Sirup durch Rückbildung eines trockenen, teilweise aufgeschlossenen Stärkepulvers mit Wasser gebildet wurde.

4. Die Verwendung nach Ansprüchen 1, 2 oder 3, bei der die Stärke Weizen-, Mais-, Kartoffel-, Tapioka-, Reis- oder Sorghumstärke ist.

5. Die Verwendung nach einem der o.g. Ansprüche, bei der das erwähnte Kohlenhydrat vollständig oder hauptsächlich die B-Fraktion von Stärke ist.

6. Die Verwendung nach einem der o.g. Ansprüche, bei der von 0,1 bis 0,5 % (Trockengewichtsbasis) Additiv, berechnet auf das Tongewicht, in der Herstellung hartgebrannter schwerer Tonwaren benutzt werden.

7. Die Verwendung nach einem der o.g. Ansprüche, bei der das Additiv gleichfalls ein Präservierungsmittel beinhaltet.

8. Ein Verfahren der Herstellung hartgebrannter schwererTonwaren, bestehend aus dem Vermischen des Tons mit Wasser, Formen der Mischung und deren Hartbrennen, gekennzeichnet dadurch, daß der Tonmischung ein von der teilweise aufgeschlossenen Stärke mit einem DE-Wert von unter 50 abgeleiteter wasserlöslicher, flüssiger Kohlenhydratsirup beigemischt wird.

## Revendications

1. L'utilisation d'un additif pour réduire l'efflorescence/l'écumage pendant la fabrication d'articles de céramique grosse, l'additif étant un sirop de glucide liquide soluble dans l'eau, dérivé de l'hydrolyse partielle d'un amidon jusqu'à une valeur DE inférieure à 50.

2. L'utilisation selon la revendication 1, selon laquelle la valeur DE est inférieure à 40.

3. L'utilisation selon la revendication 1 ou 2, selon laquelle le sirop a été formé par reconstitution d'une poudre d'amidon sec partiellement hydrolysé avec de l'eau.

4. L'utilisation selon la revendication 1, 2 ou 3, selon laquelle l'amidon est un amidon de blé, de maïs, de pomme de terre, de tapioca, de riz ou de sorgho.

5. L'utilisation de l'une quelconque des revendications précédentes, selon laquelle ledit glucide est entièrement ou principalement la fraction B de l'amidon.

6. L'utilisation selon l'une quelconque des revendications précédentes, selon laquelle on utilise entre 0,1 et 0,5 % (poids sec) d'additif en fonction du poids de l'argile pour la fabrication d'un article de céramique grosse.

7. L'utilisation selon l'une quelconque des revendications précédentes, selon laquelle l'additif contient également un préservateur.

8. Un procédé pour la fabrication d'un article de céramique grosse, procédé qui comporte le mélange de l'argile avec de l'eau, la mise en forme du mélange et sa cuisson, procédé caractérisé par l'inclusion, dans le mélange, d'un sirop de glucide soluble dans l'eau dérivé de l'hydrolyse partielle de l'amidon avec une valeur DE inférieure à 50.
